# EUROPÄISCHE PATENTSCHRIFT

(11) **EP 1 656 401 B1**
(45) Veröffentlichungstag und Bekanntmachung des Hinweises auf die Patenterteilung: **08.07.2009**
(21) Anmeldenummer: 04735226.5
(22) Anmeldetag: 28.05.2004
(51) Int. Cl.: C08F 265/06, C08F 265/10, C08F 2/00, C02F 1/56, B01D 21/01, C02F 11/14

(54) **PULVERFÖRMIGE, WASSERLÖSLICHE KATIONISCHE POLYMERZUSAMMENSETZUNG, VERFAHREN ZU IHRER HERSTELLUNG UND IHRE VERWENDUNG**
POWDERY, WATER-SOLUBLE CATIONIC POLYMER COMPOSITION, METHOD FOR THE PRODUCTION AND USE THEREOF
COMPOSITION DE POLYMERES CATIONIQUES PULVERULENTS SOLUBLES DANS L'EAU, PROCEDE DE PRODUCTION ET UTILISATION DE LADITE COMPOSITION

(30) Priorität: 14.08.2003 DE 10337764
(43) Veröffentlichungstag der Anmeldung: 17.05.2006
(73) Patentinhaber: Ashland Licensing and Intellectual Property LLC, Dublin, OH 43017 (US)
(72) Erfinder: HERTH, Gregor, 83308 Trostberg (DE); KUBIAK, Bernd, 47799 Krefeld (DE); STEINER, Norbert, 63755 Alzenau (DE); BENGHOZI, Eric, 275839 Singapore (SG)
(74) Vertreter: Brosch, Oliver
(86) Internationale Anmeldenummer: PCT/EP2004/005810
(87) Internationale Veröffentlichungsnummer: WO 2005/023885

(56) Entgegenhaltungen:
- EP-A- 0 228 637
- WO-A-02/083073
- DE-A- 19 524 867
- US-A- 5 387 318

## Beschreibung

Die vorliegende Erfindung betrifft pulverförmige, wasserlösliche kationische Polymere, die aus mindestens zwei kationischen Polymerkomponenten bestehen, die sich im Molekulargewicht unterscheiden, sowie ein Verfahren zu deren Herstellung und die Verwendung der Polymerprodukte bei der Fest-Flüssig - Trennung wie z.B. bei der Papierherstellung als Retentionshilfsmittel und bei der Schlammentwässerung/ Abwasserreinigung.

In der Praxis der Fest-Flüssig-Trennung besteht die Aufgabe durch Zugabe von Flockungshilfsmitteln ein möglichst günstiges Ergebnis hinsichtlich der Parameter Trockensubstanz des Feststoffes und Klarheit des Filtrates zu erreichen, d.h. eine möglichst vollständige Abtrennung von Feststoff aus der flüssigen Phase zu bewirken. Als Beispiel für die Bedeutung dieser Parameter sei auf eine Schlammentwässerung auf einer Kammerfilterpresse verwiesen. Da der getrocknete Schlamm transportiert und oft thermisch verwertet werden muss, ist ein möglichst hoher Anteil an Feststoff (TS-Gehalt) erwünscht. Auch das abgetrennte Filtrat muss einer Entsorgung zugeführt werden. Je klarer dieses ist, also je weniger nicht geflockte Feststoffe noch im Filtrat sind, desto besser und einfacher ist diese Entsorgung. Dann kann das Filtrat aus einer Kläranlage direkt an die Umwelt abgegeben werden und muss nicht noch einmal die Kläranlage durchlaufen. Mitunter liefert ein Flockungshilfsmittel einen geflockten Schlamm mit einem hohen Feststoffgehalt, aber eine unbefriedigende Klärung des Überstandes. Bei einem anderen Flockungsmittel liegt es dann möglicherweise umgekehrt.

Flockungshilfsmittel werden in Form von pulverförmigen Granulaten oder Wasser-in-Wasser bzw. Wasser-in-Öl-Emulsionen hergestellt und vor ihrer Verwendung in verdünnten, wässrigen Lösungen dem zu flockenden Medium zugegeben. Pulverförmige Granulate sind bevorzugt, da sie aufgrund ihres fast wasserfreien Zustandes kostengünstiger zu transportieren sind und, wie bei den W/O-Emulsionen, keine wasserunlöslichen Öl- bzw. Lösungsmittelbestandteile enthalten In der Praxis hat sich gezeigt, dass die Kombination zweier Flockungshilfsmittel oft bessere Gesamtergebnisse liefert als die Verwendung eines einzigen Flockungshilfsmittels. So beschreiben die DE-OS 1 642 795 und die EP 346 159 A1 die nacheinanderfolgende Dosierung von verschiedenen polymeren Flockungsmitteln.

Mischungen von pulverförmigen Granulaten sind im Stand der Technik beschrieben, so z. B. in der WO 99/50188, wo Pulver zweier gegensätzlich geladener Flockungshilfsmittel in einer gemeinsamen Lösung vereint werden. Aufgrund unterschiedlichen Löseverhaltens der beiden Polymerpulver kann es bereits beim Lösevorgang zu unregelmäßig zusammengesetzten Lösungsprodukten kommen.

Die Verwendung von trockenen Pulvermischungen verschiedener Polymere bei Flockungsprozessen kann durch Entmischungserscheinungen zu Fehldosierungen führen.

Aus der EP 262 945 A2 sind kationische Flockungshilfsmittel und Verfahren zu Ihrer Herstellung bekannt, die aus zwei unterschiedlichen Polymerkomponenten bestehen. Sie entstehen nicht durch Vermischung der Polymerkomponenten, sondern werden durch Polymerisation kationischer Monomere zu einer hochmolekularen kationischen Polymerkomponente (Flockkulant) in Gegenwart einer niedermolekularen kationischen Polymerkomponente (Koagulant) gebildet. Bei dieser Polymerisationsreaktion kann es zu Pfropfreaktionen am vorgelegten Polymer kommen. Aufgrund ihrer Unverträglichkeit mit dem Flockkulanten auf Basis von Acrylatmonomeren werden folgende Koagulant Polymere bevorzugt verwendet: Polymere aus Allylmonomeren, insbesondere Poly-DADMAC und Amin-Epichlorhydrin Polymere (Seite 4, Z. 40f). Das Verhältnis von Koagulant zu der hochmolekularen Polyelektrolyt-Komponente wird mit 10:1 bis 1:2, bevorzugt 5:1 bis 1:1,5 angegeben (Seite 3, Zeilen 48-49), d.h. in der bevorzugten Ausführungsform beträgt der Anteil des Koagulanten an der Polymermischung 83 bis 40 Gew.%. Die hohen Anteile an Koagulant bereiten bei der Herstellung von Polymerisationslösungen Viskositätsprobleme. Die Eigenschaften der offenbarten Flockungsmittel genügen nicht den Anforderungen wie sie an technische Flockungsprozesse in Bezug auf Schnelligkeit und Wirksamkeit gestellt werden.

Aufgabe der vorliegenden Erfindung war die Bereitstellung von gegenüber dem Stand der Technik verbesserten pulverförmigen kationischen Flockungshilfsmitteln, aufgebaut aus einem niedermolekularen Polymeranteil und einem hochmolekularen Polymeranteil. Ferner ist ein Herstellungsverfahren anzugeben, nach dem die beiden Polymerkomponenten ohne wesentliche Einschränkungen miteinander vereint werden können und die Reaktionsprodukte ohne wesentliche Einschränkungen weiterverarbeitet werden können und wobei ein in sich einheitliches und gut lösliches Polymerpulver entsteht.

Die Aufgabe wird gelöst durch eine wasserlösliche kationische Polymerzusammensetzung die mindestens zwei, im Molekulargewicht unterschiedliche kationische Polymere enthält, wobei ein erstes kationisches Polymere in Gegenwart eines zweiten kationischen Polymeren in wässriger Lösung aus seinen Monomerbestandteilen durch radikalische Polymerisation gebildet ist, dadurch gekennzeichnet, dass
- die Art der kationischen Bausteine des ersten und des zweiten Polymeren übereinstimmen,
- die Polymerisation des ersten kationischen Polymeren in einer wässrigen Lösung des zweiten kationischen Polymeren nach dem Verfahren der adiabatischen Gelpolymerisation erfolgt.
   In einer vorteilhaften Ausführungsform wird die Polymerzusammensetzung durch ein Verhältnis von zweitem kationischen Polymer zu erstem kationischen Polymer von 0,01:10 bis 1:3, vorzugsweise 0,1:10 bis <1:4 und besonders bevorzugt 0,2:10 bis <1:10 gebildet.
   Erfingdungsgemäß weisen die beiden kationischen Polymere gleiche kationische Komponenten auf, was gegenüber der Aussage der EP 262 945 A2, wonach nur durch unterschiedliche kationische Komponenten gute Ergebnisse zu erzielen sind, als überraschend anzusehen ist.
   Bei dem ersten kationischen Polymer handelt es sich um ein Copolymer aus kationischen und nichtionischen Monomeren, das zweite kationische Polymer kann dagegen sowohl ein Copolymer als auch als Homopolymer sein.
   Als kationische Monomerkomponenten eignen sich beispielsweise kationisierte Ester der (Meth)acrylsäure wie z.B. von Dimethylaminoethyl(meth)acrylat, Diethylaminoethyl(meth)acrylat, Diethylaminopropyl(meth)acrylat, Dimethylaminopropyl(meth)acrylat, Dimethylaminobutyl(methacrylat), Diethylaminobutyl(meth)acrylat, kationisierte Amide der (Meth)acrylsäure wie z.B. von Dimethylaminoethyl(meth)acrylamid, Diethylaminoethyl(meth)acrylamid Diethylaminopropyl(meth)acrylamid, Dimethylaminopropyl(meth)acrylamid, Dimethylaminobutyl(meth)acrylamid, Diethylaminobutyl(meth)acrylamid, kationisierte N-Alkylmono- und diamide mit Alkylresten von 1 bis 6 C-Atomen, wie z.B. von N-Methyl(meth)acrylamid, N,N-Dimethylacrylamid, N-Ethyl(meth)acrylamid, N-Propyl(meth)acrylamid, tert.-Butyl(meth)acrylamid, kationisierte N-Vinylimidazole sowie substituierte N-Vinylimidazole, wie z.B. von N-Vinyl-2-methylimidazol, N-Vinyl-4-methylimidazol, N-Vinyl-5-methylimidazol, N-Vinyl-2-ethylimidazol und kationisierte N-Vinylimidazoline, wie z.B. von Vinylimidazolin, N-Vinyl-2-methylimidazolin und N-Vinyl-2-ethylimidazolin.
   Die basischen Monomere werden in mit Mineralsäuren oder organischen Säuren neutralisierter oder quaternisierter Form eingesetzt, wobei die Quaternisierung vorzugsweise mit Dimethylsulfat, Diethylsulfat, Methylchlorid, Ethylchlorid oder Benzylchlorid vorgenommen wird. In einer bevorzugten Ausführungsform werden die mit Methylchlorid oder Benzylchlorid quaternisierten Monomere verwendet.
   Bevorzugte kationische Monomerkomponenten sind die kationisierten Ester und Amide der (Meth)acrylsäure, jeweils ein quaternisiertes N-Atom enthaltend und insbesondere bevorzugt werden quaternisiertes Dimethylaminopropylacrylamid und quaternisiertes Dimethylaminoethylacrylat verwendet.
   Als nichtionische Monomerkomponenten, die bevorzugt wasserlöslich sind, eignen sich beispielsweise Acrylamid, Methacrylamid, Acrylnitril, Methacrylnitril, N,N-Dimethylacrylamid, Vinylpyridin, Vinylacetat, hydroxygruppenhaltige Ester polymerisationsfähiger Säuren die Hydroxyethyl- und -propylester der Acrylsäure und Methacrylsäure, weiter aminogruppenhaltige Ester und Amide polymerisationsfähiger Säuren wie die Dialkylaminoester, z.B. Dimethyl- und Diethylaminoester der Acrylsäure und Methacrylsäure, beispielsweise Dimethylaminoethylacrylat sowie die entsprechenden Amide wie etwa Dimethylaminopropylacrylamid. Bevorzugt wird Acrylamid als nichtionische Monomerkomponente eingesetzt. Begrenzt wasserlösliche Monomere werden nur in dem Umfang eingesetzt wie sie die Wasserlöslichkeit des resultierenden Copolymers nicht beeinträchtigen.
   Das erste kationische Polymer ist ein hochmolekulares Polymerisat. Sein mittleres Molekulargewicht Mw liegt über 1 Mio., bevorzugt über 3 Mio. Das Molekulargewicht des ersten kationischen Polymers ist höher als das des zweiten kationischen Polymeren. Das hohe Molekulargewicht des ersten kationischen Polymers verbessert die Wirkung der erfindungsgemäßen Polymerzusammensetzung im Flockungsprozess.
   Die Ladungsdichte des ersten kationischen Polymeren ist im Prinzip frei wählbar und muss auf die jeweilige Anwendung abgestimmt werden. In einer vorteilhaften Ausführungsform ist das erste kationische Polymere aus 20 bis 90 Gew.% kationischen Monomeren gebildet, bevorzugt aus 40 bis 80 Gew.
   In einer vorteilhaften Ausführungsform ist das zweite kationische Polymere aus 70 bis 100 Gew.% kationischen Monomeren gebildet, bevorzugt aus 75 bis 100 Gew.% und besonders bevorzugt aus 100 Gew.%
   Das zweite kationische Polymer ist niedermolekularer als das erste kationische Polymer, sein mittleres Molekulargewicht Mw liegt unter 1 Mio, bevorzugt zwischen 50 000 bis 700 000 und besonders bevorzugt zwischen 100 000 und 500 000.
   In einer weiteren vorteilhaften Ausführungsform weist das erste kationische Polymere eine niedrigere kationische Ladungsdichte auf als das zweite kationische Polymere.
   Die Herstellung der erfindungsgemäßen wasserlöslichen kationischen Polymerzusammensetzungen geschieht nach dem Verfahren adiabatischen Gelpolymerisation, wobei ein erstes kationisches Polymer in Gegenwart eines zweiten kationischen Polymeren aus seinen Monomerbestandteilen in wässriger Lösung durch eine radikalische Polymerisation gebildet wird.
   Zur Durchführung wird zunächst eine wässrige Lösung aus kationischen und gegebenenfalls nichtionischen Monomeren und dem zweiten kationischen Polymeren angesetzt, die Starttemperatur für die Polymerisation in einem Bereich von -10 bis 25°C eingestellt und durch ein Inertgas von Sauerstoff befreit. Durch Zusatz eines Polymerisationsinitiators wird die exotherme Polymerisationsreaktion der Monomere gestartet und es tritt eine Erwärmung des Polymerisationsansatzes unter Ausbildung eines Polymergels ein. Nach Erreichen des Temperaturmaximums kann das sich bildende feste Polymergel sofort weiterverarbeitet werden oder erst nach einer Haltezeit, bevorzugt wird das Polymergel sofort nach Erreichen der Maximaltemperatur weiterverarbeitet.
   Die wässrige Mischung aus Monomeren und dem zweiten kationischen Polymer wird üblicherweise in einer Konzentration von 10 bis 60 Gew.%, vorzugsweise 15 bis 50 Gew.% und besonders bevorzugt 25 bis 45 Gew.% angesetzt.
   In einer bevorzugten Ausführungsform wird die bei der Polymerisation des zweiten kationischen Polymeren erhaltene Lösung direkt für die Herstellung der erfindungsgemäßen Produkte verwendet.
   Die Starttemperatur für die Polymerisationsreaktion wird auf einen Bereich von
- 10°C bis 25°C, vorzugsweise auf einen Bereich von 0°C bis 15°C eingestellt. Höhere Starttemperaturen führen zu Polymerisatgelen, die aufgrund ihrer Weichheit in den nachfolgenden Zerkleinerungs- und Trocknungsprozessen nicht mehr weiterzuverarbeiten sind.

Die Polymerisation des ersten kationischen Polymeren wird als adiabatische Polymerisation durchgeführt und kann sowohl mit einem Redoxsystem als auch mit einem Photoinitiator gestartet werden. Außerdem ist eine Kombination von beiden Start-Varianten möglich.

Das Redox-Initiatorsystem besteht aus mindestens zwei Komponenten: Einem organischen oder anorganischen Oxidationsmittel und einem organischen oder anorganischen Reduktionsmittel. Häufig werden dabei Verbindungen mit Peroxideinheiten verwendet, z.B. anorganische Peroxide wie Alkalimetall- und Ammoniumpersulfat, Alkalimetall- und Ammoniumperphosphate, Wasserstoffperoxid und dessen Salze (Natriumperoxid, Bariumperoxid) oder organische Peroxide wie Benzoylperoxyd, Butylhydroperoxid oder Persäuren wie Peressigsäure. Daneben können aber auch andere Oxidationsmittel eingesetzt werden, z.B. Kaliumpermanganat, Natrium- und Kaliumchlorat, Kaliumdichromat usw. Als Reduktionsmittel können schwefelhaltige Verbindungen wie Sulfite, Thiosulfate, Sulfinsäure, organische Thiole (Ethylmercaptan, 2-Hydroxyethanthiol, 2-Mercaptoethylammoniumchlorid, Thioglykolsäure) und andere verwendet werden. Daneben sind Ascorbinsäure und niedervalente Metallsalze möglich [Kupfer(I); Mangan(II); Eisen(II)]. Auch Phosphorverbindungen können durchaus verwendet werden, z.B. Natriumhypophosphit. Im Falle einer Photopolymerisation wird die Reaktion bevorzugt mit UV-Licht gestartet, das den Zerfall des Starters bewirkt. Als Starter können beispielsweise Benzoin- und Benzoinderivate, wie Benzoinether, Benzil und seine Derivate, wie Benzilketale, Acryldiazoniumsalze, Azoinitiatoren wie z.B. 2,2'-Azobis(isobutyronitril), 2,2'-Azobis(2-amidinopropan)-hydrochlorid oder Acetophenonderivate verwendet werden. Die Menge der oxidierenden und der reduzierenden Komponente liegt im Bereich zwischen 0,00005 und 0,5 Gew.%, vorzugsweise von 0,001 bis 0,1 Gew.% bezogen auf die Monomerlösung und für Photoinitiatoren zwischen 0,001 und 0,1 Gew.% , bevorzugt 0,002 bis 0,05 Gew.%.

Die Polymerisation wird in wässriger Lösung diskontinuierlich in einem Polymerisationsgefäß oder kontinuierlich auf einem endlosen Band, wie es beispielsweise in der DE 35 44 770 beschrieben ist, durchgeführt. Diese Schrift wird hiermit als Referenz eingeführt und gilt als Teil der Offenbarung. Der Prozess wird bei Atmosphärendruck ohne äußere Wärmezufuhr durchgeführt, wobei durch die Polymerisationswärme eine vom Gehalt an polymerisierbarer Substanz abhängige maximale Endtemperatur von 50 bis 150 C erhalten wird.

Nach dieser erfindungsgemäßen Polymerisationsweise werden Polymerisate mit entscheidend besseren Produkteigenschaften erhalten als sie für Produkte gemäß der EP 262945 gemessen wurden, die durch eine isotherme Polymerisation synthetisiert wurden.

Nach dem Ende Polymerisation erfolgt eine Zerkleinerung des als Gel vorliegenden Polymerisates in technisch üblichen Apparaten. Das Verhältnis von zweitem zu erstem kationischen Polymer ist entscheidend für die Weiterverarbeitung des Polymergels. Überschreitet das Verhältnis den Wert von 0,01:10 bis 1:3, so entstehen sehr weiche Gele, die nach der Zerkleinerung sofort wieder verkleben und eine Trocknung in technischem Maßstab nahezu unmöglich machen. Besonders kritisch sind Polymerisate mit kationischen Monomeranteilen von über 60 Gew.% weiterzuverarbeiten. Hierbei hat es sich oftmals bewährt, das Verhältnis von zweitem zu erstem kationischen Polymer auf 0,2:10 bis <1:10 einzustellen.

Das zerkleinerte Gel wird diskontinuierlich in einem Umlufttrockenschrank bei 70°C bis 150°C, bevorzugt bei 80°.C bis 120°C und besonders bevorzugt 90°C bis 110°C getrocknet. Kontinuierlich erfolgt die Trocknung in den gleichen Temperaturbereichen beispielsweise auf einem Bandtrockner oder in einem Wirbelbetttrockner. Das Produkt weist nach der Trocknung vorzugsweise einen Feuchtegehalt von kleiner oder gleich 12 %, besonders bevorzugt kleiner oder gleich 10 % auf.

Nach der Trocknung wird das Produkt auf die gewünschte Kornfraktion gemahlen. Um ein schnelles Auflösen des Produktes zu erreichen, müssen mindestens 90 Gew.% des Produktes unter 2,0 mm, bevorzugt 90 Gew.% unter 1,5 mm groß sein. Feinanteile unter 0,1 mm sollten weniger als 10 Gew.% betragen, bevorzugt weniger als 5 Gew.%.

Die erfindungsgemäßen Polymerisate eignen sich als Flockungshilfsmittel im Zuge der Fest/Flüssig-Trennung. Insbesondere sind sie geeignet einsetzbar bei der Reinigung von Abwässern und bei der Aufbereitung von Trinkwasser. Darüber hinaus sind sie vorteilhaft als Retentionshilfsmittel in den Flockungsprozessen während der Herstellung von Papier verwendbar.

Im folgenden wird die Erfindung anhand von Beispielen erläutert.

### Beispiele

### Bestimmung der Viskosität des Polymeren

Die Viskositäten wurden mit einem Brookfield-Viskosimeter an einer 0,5 Gew.% Lösung in 10 Gew.% NaCl-Lösung bestimmt. Dabei betrug die Lösezeit eine Stunde.

Folgende Abkürzungen werden verwendet:

| | |
|---|---|
| ABAH: | 2,2'-Azobis(2-amidinopropan)-hydrochlorid |
| DIMAPA-Quat: | 3-Dimethylammoniumpropyl(meth)acrylamid, das mit Methylchlorid quaterniert wurde |
| ADAME-Quat: | 2-Dimethylammoniumethyl(meth)acrylat, das mit Methylchlorid quaterniert wurde |
| DADMAC | Diallyldimethylammoniumchlorid |

### Zweites kationisches Polymere

Bei den in den Beispielen verwendeten zweiten kationischen Polymeren handelt es sich um Lösungspolymere aus DIMAPA-Quat, die mit verschiedenen Polymergehalten und verschiedenen Molekulargewichten (Mw nach GPC ) hergestellt wurden. Die näheren Eigenschaften dieser Produkte sind in der Tabelle aufgeführt:

| | **Typ** | **Polymergehalt** | **Molekulargewicht** |
|---|---|---|---|
| **K1** | Poly-DADMAC | 40 % | 300.000 |
| **K2** | Poly-DIMAPA-Quat | 25 % | 1.000.000 |
| **K3** | Poly-DIMAPA-Quat | 40 % | 100.000 |
| **K4** | Poly-DIMAPA-Quat | 25% | 500.000 |

### Bestimmung des Entwässerungseffektes nach der Siebtest-Methode

Diese Testmethode ist dem betrieblich zur Anwendung kommenden Entwässerungsverfahren, nämlich der kontinuierlichen Druckfiltration mittels Filterpressen oder Zentrifugalentwässerung in Zentrifugen, angepasst.

Mit dieser Methode werden gewöhnlich organische kationische Polymere bezüglich ihrer Eignung zur Konditionierung und Entwässerung von kommunalen oder industriellen Schlämmen geprüft.

Der Schlamm wird mit der zu prüfenden Flockungshilfsmittel-Lösung unter konstanten Bedingungen (je nach vorhandenem Entwässerungsaggregat) konditioniert. Nach der Konditionierung wird die Schlammprobe auf einem Metallsieb (200 µm Maschenweite) filtriert (= entwässert). Gemessen wird die Entwässerungsdauer (t_{E}) für eine vorgegebene Filtratmenge und das ablaufende Filtrat in seiner Klarheit in einem Klärkeil (optisch) beurteilt.

| | | |
|---|---|---|
| Klarheit: | "0" | = keine Klärung |
| Klarheit: | "46" | = beste Klärung |

### Erfindungsgemäße Polymere:

Die erfindungsgemäßen Polymere werden nach dem Verfahren der Gelpolymerisation hergestellt.

### Polymer 1

In einem Polymerisationsgefäß wurden zunächst 390,0 g 50 Gew.%. wässrige Acrylamidlösung vorgelegt und mit 93,8 g Wasser sowie 210 mg Versenex 80 vermischt. Nach der Zugabe von 325,0 g 60 Gew.%. DIMAPA-Quat und 140 g der 25 Gew.%. Lösung des K2 wurde mit 4,0 g 50 Gew.%. Schwefelsäure auf pH 5,0 eingestellt, auf 0°C abkühlt und mit Stickstoff ausgeblasen. Nach der Zugabe von 0,45 g ABAH (2,2'-Azobis(2-methylpropionamidin)dihydrochlorid) wurde die Polymerisation mit UV-Licht gestartet. Binnen 25 min läuft die Polymerisation von 0° C auf 80 °C. Das Polymer wurde mit einem Fleischwolf zerkleinert und bei 100°C für 90 min getrocknet. Das Produkt wurde auf eine Kornfraktion von 90-1400 µm vermahlen.

### Polymer 2

Die Synthese erfolgte wie die von Polymer 1, nur wurden 90,0 g der 25 Gew.%. Lösung von K3 zugegeben.

### Polymer 3

Die Synthese erfolgte wie die von Polymer 1, nur wurden 140,0 g der 25 Gew.%. Lösung von K4 und 93,8 g Wasser zugegeben.

### Polymer 4

Die Synthese erfolgte wie die von Polymer 1, nur wurden 187,2 g der 25 Gew.%. Lösung von K2 und 93,8 g Wasser zugegeben.

### Polymer 5

Die Synthese erfolgte wie die von Polymer 1, nur wurden 117,0 g der 25 Gew.%. Lösung von K3 zugegeben.

### Polymer 6

Die Synthese erfolgte wie die von Polymer 1, nur wurden 187,2g der 25 Gew.%. Lösung von K4 und 93,8 g Wasser zugegeben.

### Beispiele zur Starttemperatur

Je höher die Starttemperatur, desto weicher sind die Gele, da die Molekulargewichte niedriger werden. Dies könnte man mit einer niedrigeren Monomerkonzentration verhindern. Beides führt aber zu Gelen, die nicht mehr zu verarbeiten sind. Daher sind generell Starttemperaturen von über 25 °C nach dem erfindungsgemäßen Verfahren, das Gelzerkleinerung und Trocknung beinhaltet, nicht möglich.

### Polymer 7

Die Synthese erfolgte wie in Polymer 2 beschrieben, nur wurde bei 10 °C gestartet.

### Polymer 8

Die Synthese erfolgte wie in Polymer 2 beschrieben, nur wurde bei 15 °C gestartet.

### Polymer 9

Die Synthese erfolgte wie in Polymer 2 beschrieben, nur wurde bei 20 °C gestartet.

### Vergleichspolymere:

### Vergleichspolymer 1

In einem Polymerisationsgefäß wurden zunächst 407,0 g 50 %ige wässrige Acrylamidlösung vorgelegt und mit 312,7 g Wasser sowie 0,15 g Versenex 80 vermischt. Nach der Zugabe von 277,50 g 60 %ige DIMAPA-Quat wurde mit 2 g 50 %iger Schwefelsäure und 0,30 g Ameisensäure auf pH 5,0 eingestellt, auf 0°C abgekühlt und mit Stickstoff ausgeblasen. Nach der Zugabe von 0,40 g ABAH (2,2'-Azobis(2-methylpropionamidin)dihydrochlorid) wurde die Polymerisation mit UV-Licht gestartet. Binnen 25 min läuft die Polymerisation von 0° C auf 80 °C. Das Polymer wurde mit einem Fleischwolf zerkleinert und bei 100°C für 90 min getrocknet. Das Produkt wurde auf eine Kornfraktion von 90-1400 µm vermahlen.

### Vergleichspolymer 2

In einem Polymerisationsgefäß wurden zunächst 240,0 g 50 Gew.%. wässrige Acrylamidlösung vorgelegt und mit 285,3 g Wasser sowie 210 mg Versenex 80 vermischt. Nach der Zugabe von 466,7 g 60 Gew.%. DIMAPA-Quat wurde mit 8,0 g 50 Gew.%. Schwefelsäure und 0,30 g Ameisensäure auf pH 5,0 eingestellt, auf 0°C abgekühlt und mit Stickstoff ausgeblasen. Nach der Zugabe von 0,40 g ABAH (2,2'-Azobis(2-methylpropionamidin)dihydrochlorid) wurde die Polymerisation mit UV-Licht gestartet. Binnen 25 min läuft die Polymerisation von 0°C auf 80 °C. Das Polymer wurde mit einem Fleischwolf zerkleinert und bei 100°C für 90 min getrocknet. Das Produkt wurde auf eine Kornfraktion von 90-1400 µm vermahlen.

### Vergleichspolymer 3

In einem Polymerisationsgefäß wurden zunächst 342,0 g 50 Gew.%. wässrige Acrylamidlösung vorgelegt und mit 394,7 g Wasser sowie 210 mg Versenex 80 vermischt. Nach der Zugabe von 261,3 g 80 Gew.%. ADAME-Quat wurde mit 2,0 g 50 Gew.%. Schwefelsäure auf pH 5,0 eingestellt, auf 0°C abgekühlt und mit Stickstoff ausgeblasen. Nach der Zugabe von 0,40 g ABAH (2,2'-Azobis(2-methylpropionamidin)dihydrochlorid) wurde die Polymerisation mit UV-Licht gestartet. Binnen 25 min läuft die Polymerisation von 0°C auf 80 °C. Das Polymer wurde mit einem Fleischwolf zerkleinert und bei 100°C für 90 min getrocknet. Das Produkt wurde auf eine Kornfraktion von 90-1400 µm vermahlen.

### Vergleichspolymer 4

In einem Polymerisationsgefäß wurden zunächst 270,0 g 50 Gew.%. wässrige Acrylamidlösung vorgelegt und mit 335,5 g Wasser sowie 210 mg Versenex 80 vermischt. Nach der Zugabe von 393,8 g 80 Gew.%. ADAME-Quat wurde mit 2,0 g 50 %iger Schwefelsäure auf pH 5,0 eingestellt, auf 0°C abgekühlt und mit Stickstoff ausgeblasen. Nach der Zugabe von 0,40 g ABAH (2,2'-Azobis(2-methylpropionamidin)dihydrochlorid) wurde die Polymerisation mit UV-Licht gestartet. Binnen 25 min läuft die Polymerisation von 0°C auf 80 °C. Das Polymer wurde mit einem Fleischwolf zerkleinert und bei 100°C für 90 min getrocknet. Das Produkt wurde auf eine Kornfraktion von 90-1400 µm vermahlen.

### Vergleichspolymer 5 (nach EP 262945 B1)

Eine Mischung aus 133,3 g 75 Gew.%. MADAME-Quat-Lösung, 250 g K1 und 283,7 g Wasser wurde mit Stickstoff gespült und auf 70 °C geheizt. Nach der Zugabe von 3,0 mL einer 2%igen methanolischen AIBN-Lösung wurde 3 h bei 70 °C (isotherm) gerührt. Die Produktviskosität lag bei 19000 mPas.

### Vergleichspolymer 6 (nach EP 262945 B1)

Die Synthese erfolgte wie in Vergleichsbeispiel 5 beschrieben, nur wurden 250,0 g K1, 106,7 g MADAME-Quat, 40,0 g Acrylamid und 270,3 g Wasser eingesetzt.

### Vergleichspolymer 7 (nach EP 262945 B1)

Die Synthese erfolgte wie in Vergleichspolymer 5 beschrieben, nur wurden 250,0 g K1, 80,0 g MADAME-Quat, 80,0 g Acrylamid und 257,3 g Wasser eingesetzt.

### Vergleichspolymer 8 Starttemperatur

Die Synthese erfolgte wie in Vergleichsbeispiel 6 beschrieben, nur wurde bei 3°C mit 1000 ppm Na₂S₂O₈ 7 ppm FeSO₄ und 2000 ppm Na₂S₂O₅ gestartet. Die Temperatur des Ansatzes stieg in 24 Min. auf 33°C. Nun wurde 60 Min. nachgerührt.

### Vergleichspolymer 9 - Starttemperatur

Die Synthese erfolgte wie in Vergleichsbeispiel 7 beschrieben, nur wurde bei 3°C mit 500 ppm Na₂S₂O₈ 7 ppm FeSO₄ und 1000 ppm Na₂S₂O₅ gestartet. Die Temperatur des Ansatzes stieg in 40 Min. auf 31 °C. Nun wurde 60 Min. nachgerührt.

### Anwendungstechnische Beispiele:

Die anwendungstechnischen Versuche wurden alle an Klärschlamm der Kläranlage Ilverich durchgeführt, der Schlamm wurde aber an verschiedenen Tagen entnommen, daher können für gleiche Polymer/Schlamm-Kombination die Werte mitunter schwanken. Innerhalb eines Beispiels wurde immer dieselbe Schlammcharge verwendet. Die Eigenschaften eines Klärschlammes aus ein und derselben Kläranlage können, wie dem Fachmann bekannt ist, mit der Zeit schwanken.

### Anwendungsbeispiel 1:

Erfindungsgemäße Polymere 1 bis 3 werden mit Vergleichspolymer 1 verglichen so wie mit einer getrennten Dosierung von zuerst zweitem kationischen Polymer und danach erstem kationischen Polymer in Form der Vergleichspolymerisate ohne zweitem kat. Polymer.
Die Rührzeit betrug 10 s, die Filtratmenge 200 mL.

WS: Polymermenge ("Wirksubstanz"), TS: Trockensubstanz Im Klärschlamm

| | | | |
|---|---|---|---|
| Zugabemenge [Kg(WS)/t TS] | 3,9 | 4,2 | 4,5 |
| Zugabemenge [g(WS)/m³] | 120 | 130 | 140 |
| Vergleichspolymer 1 | 37s | 22s | 18s |
| | **20** | **26** | **29** |
| Vergleichspolymer 1 mit 10 % K2 | 33s | 24s | 19s |
| | **25** | **28** | **29** |
| Vergleichspolymer 1 mit 10 % K3 | 34s | 21s | 20s |
| | **26** | **29** | **30** |
| Vergleichspolymer 1 mit 10 % K4 | 32s | 18s | 17s |
| | **25** | **29** | **30** |
| Polymer 1 | 27s | 18s | 13s |
| | **29** | **30** | **35** |
| Polymer 2 | 26s | 15s | 12s |
| | **29** | **31** | **41** |
| Polymer 3 | 27s | 15s | 12s |
| | **29** | **34** | **42** |

| | | | |
|---|---|---|---|
| Angabe in s = Zeit für 200 mL Filtrat, in Fett Klarheit der Lösung | | | |

### Anwendungsbeispiel 2

Erfindungsgemäße Polymere 4 bis 6 werden mit Vergleichspolymer 2 verglichen so wie mit einer getrennten Dosierung von zuerst zweitem kationischen Polymer und danach erstem kationischen Polymer in Form der Vergleichspolymerisate ohne zweitem kat. Polymer.
Die Rührzeit betrug 10 s, die Filtratmenge 200 mL.

WS: Polymermenge ("Wirksubstanz"), TS: Trockensubstanz Im Klärschlamm

| | | | |
|---|---|---|---|
| Zugabemenge [Kg(WS)/t TS] | 4,2 | 4,5 | 4,8 |
| Zugabemenge [g(WS)/m³] | 130 | 140 | 150 |
| Vergleichspolymer 2 | 35s | 25s | 16s |
| | **23** | **28** | **34** |
| Vergleichspolymer 2 mit 10 % K2 | 35s | 25s | 16s |
| | **26** | **31** | **34** |
| Vergleichspolymer 2 mit 10 % K3 | 44s | 28s | 22s |
| | **27** | **33** | **36** |
| Vergleichspolymer 2 mit 10 % K4 | 40s | 31s | 23s |
| | **28** | **32** | **35** |
| Polymer 4 | 37s | 19s | 16s |
| | **26** | **35** | **40** |
| Polymer 5 | 39s | 25s | 21s |
| | **29** | **33** | **35** |
| Polymer 6 | 48s | 35s | 20s |
| | **30** | **32** | **38** |

| | | | |
|---|---|---|---|
| Angabe in s = Zeit für 200 mL Filtrat, in Fett Klarheit der Lösung | | | |

Unter Berücksichtigung der beiden Parameter Geschwindigkeit der Filtration und Klarheit des Filtrates ergibt sich aus den anwendungstechnischen Beispielen eine bessere Wirkung der erfindungsgemäßen Polymere.

Die Produkte gemäß der Vergleichsbeispiele V5 bis V9 nach EP262945 B1 wurden anwendungstechnisch geprüft und zeigten sich den erfindungsgemäßen Polymeren deutlich unterlegen. Bei Dosiermengen, mit denen die erfindungsgemäßen Polymere gute Entwässerungsergebnisse lieferten, zeigten die Vergleichsbeispiele noch keine auch annähernd befriedigende Entwässerungsleistung.

## Patentansprüche

1. Pulverförmige, wasserlösliche kationische Polymerzusammensetzung, die mindestens zwei, im Molekulargewicht unterschiedliche kationische Polymere enthält, wobei ein erstes kationisches Polymeres in Gegenwart eines zweiten kationischen Polymeren in wässriger Lösung aus seinen Monomerbestandteüen durch radikalische Polymerisation gebildet ist, **dadurch gekennzeichnet, dass**
- die Art der kationischen Bausteine des ersten und des zweiten Polymeren übereinstimmen,
- das erste kationische Polymer ein Copolymer aus kationischen und nichtionischen Monomeren ist,
- das erste kationische Polymer ein mittleres Molekulargewicht M_{w} von größer 1 Mio. aufweist,
- die Polymerisation des ersten kationischen Polymeren in einer wässrigen Lösung des zweiten kationischen Polymeren nach dem Verfahren der adiabatischen Gelpolymerisation erfolgt und
- das Verhältnis von zweitem zu erstem kationischen Polymer zwischen 0,01:10 bis 1:3 liegt.

2. Zusammensetzung nach Anspruch 1, **dadurch gekennzeichnet, dass** das zweite kationische Polymer ein mittleres Molekulargewicht M_{w} von unter 1 Mio. aufweist.

3. Zusammensetzung nach Anspruch 1 und 2, **dadurch gekennzeichnet, dass** das erste und das zweite kationische Polymere unter Verwendung von kationischen Monomeren, ausgewählt aus der Gruppe der kationisierten Ester und Amide der (Meth)acrylsäure, jeweils ein quaternisiertes N-Atom enthaltend, vorzugsweise quaternisiertes Dimethylaminopropylacrylamid und quaternisiertes Dimethylaminoethylacrylat gebildet ist.

4. Zusammensetzung nach Anspruch 1 bis 3, **dadurch gekennzeichnet, dass** das erste bzw. das zweite kationische Polymere durch Copolymerisation mit weiteren wasserlöslichen Monomeren, vorzugsweise mit Acrylamid hergestellt ist.

5. Zusammensetzung nach Anspruch 1 bis 4, **dadurch gekennzeichnet, dass** das erste kationische Polymere eine niedrigere kationische Ladungsdichte als das zweite kationische Polymere aufweist.

6. Zusammensetzung nach Anspruch 1 bis 5, **dadurch gekennzeichnet, dass** das erste kationische Polymere aus 20 bis 90 Gew.% kationischen Monomeren zusammengesetzt ist.

7. Zusammensetzung nach Anspruch 1 bis 6, **dadurch gekennzeichnet, dass** das zweite kationische Polymere aus 70 bis 100 Gew.-% kationischen Monomeren zusammengesetzt ist.

8. Verfahren zur Herstellung kationischer Polymerzusammensetzungen gemäß der Ansprüche 1 bis 7, die mindestens zwei, im Molekulargewicht verschieden zusammengesetzte kationische Polymere enthalten, wobei ein erstes kationisches Polymeres in Gegenwart eines zweiten kationischen Polymeren in wässriger Lösung aus seinen Monomerbestandteilen durch radikalische Polymerisation gebildet ist, die Art der kationischen Bausteine des ersten und des zweiten Polymeren übereinstimmen, das erste kationische Polymer ein Copolymer aus kationischen und nichtionischen Monomeren ist, das erste kationische Polymer ein mittleres Molekulargewicht M_{w} von größer 1 Mio. aufweist, die Polymerisation des ersten kationischen Polymeren in einer wässrigen Lösung des zweiten kationischen Polymeren nach dem Verfahren der adiabatischen Gelpolymerisation erfolgt und das Verhältnis von zweitem zu erstem kationischen Polymer zwischen 0,01:10 bis 1:3 liegt, **dadurch gekennzeichnet, dass**
- die wässrige Lösung aus kationischen und nichtionischen Monomeren und dem zweiten kationischen Polymeren mit einer Konzentration von 10 bis 60 Gew.-% angesetzt, die Starttemperatur für die Polymerisation in einem Bereich von -10 bis 25 °C eingestellt und durch ein Inertgas von Sauerstoff befreit wird,
- durch Zusatz eines Polymerisationsinitiators die exotherme Polymerisationsreaktion der Monomere gestartet wird und eine Erwärmung des Polymerisationsansatzes unter Ausbildung eines Polymergels bis zu seiner Maximaltemperatur erfolgt und
- nach Erreichen der Maximaltemperatur das Polymergel mechanisch zerkleinert und getrocknet wird.

9. Verfahren nach Anspruch 8, **dadurch gekennzeichnet, dass** die Starttemperatur der Polymerisation auf einen Bereich von 0 bis 15 °C eingestellt wird.

10. Verfahren nach Anspruch 8 und 9, **dadurch gekennzeichnet, dass** die Konzentration der wässrigen Lösung aus Monomer und zweitem kationischen Polymer 15 bis 50 Gew.-% beträgt.

11. Verfahren nach Anspruch 8 bis 10, **dadurch gekennzeichnet, dass** der Polymerisationsinitiator aus einem Redoxsystem und/oder einem durch UV-Strahlung aktivierbaren System besteht.

12. Verfahren nach Anspruch 8 bis 11, **dadurch gekennzeichnet, dass** die Polymerisation auf einem Polymerisationsband durchgeführt wird.

13. Verfahren nach Anspruch 8 bis 12, **dadurch gekennzeichnet, dass** das wässrige Polymerisatgel nach seiner Zerkleinerung bei Temperaturen von 80 °C bis 120 °C auf einen Feuchtegehalt von kleiner gleich 12% getrocknet wird.

14. Verwendung der Polymere nach Anspruch 1 bis 7 als Flockungsmittel zur Fest/Flüssig-Trennung.

15. Verwendung nach Anspruch 14 zur Reinigung von Abwässern und zur Aufbereitung von Trinkwasser.

16. Verwendung nach Anspruch 14 bei der Herstellung von Papier.

## Claims

1. A powdery, water-soluble, cationic polymer composition that contains at least two cationic polymers differing in molecular weight, wherein a first cationic polymer is formed by radical polymerization from its monomer constituents in the presence of a second cationic polymer in aqueous solution, **characterized in that**
- the cationic structural units of the first and second polymer are of corresponding type,
- the first cationic polymer is a copolymer of cationic and nonionic monomers, the first cationic polymer has a weight-average molecular weight M_{w} higher than 1 million,
- the polymerization of the first cationic polymer takes place in an aqueous solution of the second cationic polymer according to the method of adiabatic gel polymerization and
- the ratio of the second to the first cationic polymer lies between 0.01:10 and 1:3.

2. A composition according to claim 1, **characterized in that** the second cationic polymer has a weight-average molecular weight M_{w} lower than 1 million.

3. A composition according to claim 1 or 2, **characterized in that** the first and the second cationic polymer are formed using cationic monomers selected from the group of cationized esters and amides of (meth)aarylic acid, in each case containing a quaternized N atom, preferably quaternized dimethylaminopropylacrylamide and quaternized dimethylaminoethyl acrylate.

4. A composition according to claim 1 to 3, **characterized in that** the first or the second cationic polymer is produced by copolymerization with further water-soluble monomers, preferably with acrylamide.

5. A composition according to claim 1 to 4, **characterized in that** the first cationic polymer has a lower cationic charge density than the second cationic polymer.

6. A composition according to claim 1 to 5, **characterized in that** the first cationic polymer is composed of 20 to 90 wt% of cationic monomers.

7. A composition according to claim 1 to 6, **characterized in that** the second cationic polymer is composed of 70 to 100 wt% of cationic monomers.

8. A method of producing cationic polymer compositions according to claims 1 to 7, which polymer compositions contain at least two cationic polymers composed differently in molecular weight, wherein a first cationic polymer is formed by radical polymerization from its monomer constituents in the presence of a second cationic polymer in aqueous solution, the cationic structural units of the first and second polymer are of corresponding type, the first cationic polymer is a copolymer of cationic and nonionic monomers, the first cationic polymer has a weight-average molecular weight M_{w} higher than 1 million, the polymerization of the first cationic polymer takes place in an aqueous solution of the second cationic polymer according to the method of adiabatic gel polymerization and the ratio of the second to the first cationic polymer lies between 0.01:10 and 1:3,
**characterized in that**
- the aqueous solution of cationic and nonionic monomers and the second cationic polymer is prepared with a concentration of 10 to 60 wt%, the start temperature for the polymerization is adjusted in a range of -10°C to 25°C, and oxygen is purged by an inert gas,
- the exothermic polymerization reaction of the monomers is started by addition of a polymerization initiator, and heating of the polymerization mixture takes place with formation of a polymer gel up to its maximum temperature and
- after the maximum temperature has been reached, the polymer gel is subjected to mechanical size reduction and to drying.

9. A method according to claim 8, **characterized in that** the start temperature of the polymerization is adjusted to a range of 0°C to 15°C.

10. A method according to claim 8 and 9, **characterized in that** the concentration of the aqueous solution of monomer and second cationic polymer is 15 to 50 wt%.

11. A method according to claim 8 to 10, **characterized in that** the polymerization initiator comprises a redox system and/or a system that can be activated by UV radiation.

12. A method according to claim 8 to 11, **characterized in that** the polymerization is carried out on a polymerization belt.

13. A method according to claim 8 to 12, **characterized in** than, after size reduction, the aqueous polymer gel is dried at temperatures of 80°C to 120°C to a moisture content of less than or equal to 12%.

14. The use of the polymers according to claim 1 to 7 as flocculation agents for solid/liquid separation.

15. The use according to claim 14 for purification of wastewaters and for conditioning of potable water.

16. The use according to claim 14 during paper manufacture.

## Revendications

1. Composition pulvérulente de polymères cationiques, soluble dans l'eau, qui contient au moins deux polymères cationiques différents quant à la masse moléculaire, un premier polymère cationique étant formé par polymérisation radicalaire à partir de ses composants monomères en solution aqueuse, en présence d'un second polymère cationique, **caractérisée en ce que**
- les types des composants cationiques du premier polymère et du second polymère sont en concordance,
- le premier polymère cationique est un copolymère de monomères cationiques et de monomères non ioniques,
- le premier polymère cationique présente une masse moléculaire moyenne M_{w} supérieure à 1 million,
- la polymérisation du premier polymère cationique s'effectue selon le procédé de la polymérisation en gel adiabatique, dans une solution aqueuse du second polymère cationique et
- le rapport du second polymère cationique au premier polymère cationique est compris entre 0,01:10 et 1:3.

2. Composition selon la revendication 1,
**caractérisée en ce que** le second polymère cationique a une masse moléculaire moyenne M_{w} inférieure à 1 million.

3. Composition selon la revendication 1 ou 2, **caractérisée en ce que** le premier polymère cationique et le second polymère cationique sont formés avec utilisation de monomères cationiques choisis dans le groupe des amides et esters rendus cationiques de l'acide (méth)acrylique, contenant chacun un atome d'azote rendu quaternaire, de préférence du diméthylaminopropylacrylamide rendu quaternaire et de l'acrylate de diméthylaminoéthyle rendu quaternaire.

4. Composition selon l'une quelconque des revendications 1 à 3, **caractérisée en ce que** le premier polymère cationique ou le second polymère cationique est formé par copolymérisation avec un autre monomère soluble dans l'eau, de préférence avec de l'acrylamide.

5. Composition selon l'une quelconque des revendications 1 à 4, **caractérisée en ce que** le premier polymère cationique présente une plus faible densité de charge que le second polymère cationique.

6. Composition selon l'une quelconque des revendications 1 à 5, **caractérisée en ce que** le premier polymère cationique est composé de 20 à 90 % en poids de monomères cationiques.

7. Composition selon l'une quelconque des revendications 1 à 6, **caractérisée en ce que** le second polymère cationique est composé de 70 à 100 % en poids de monomères cationiques.

8. Procédé pour la préparation de compositions de polymères cationiques selon les revendications 1 à 7, qui contiennent au moins deux polymères cationiques composés différemment quant à la masse moléculaire, un premier polymère cationique étant formé par polymérisation radicalaire à partir de ses composants monomères en solution aqueuse, en présence d'un second polymère cationique, le type des composants cationiques, les types des composants cationiques du premier polymère et du second polymère étant en concordance, le premier polymère cationique étant un copolymère de monomères cationiques et de monomères non ioniques, le premier polymère cationique présentant une masse moléculaire moyenne M_{w} supérieure à 1 million, la polymérisation du premier polymère cationique s'effectuant selon le procédé de la polymérisation en gel adiabatique dans une solution aqueuse du second polymère cationique et le rapport du second polymère cationique au premier polymère cationique étant compris entre 0,01:10 et 1:3, **caractérisé en ce que**
- la solution aqueuse de monomères cationiques et de monomères non ioniques et du second polymère cationique est disposée à une concentration de 10 à 60 % en poids, la température de départ pour la polymérisation est ajustée dans une plage de -10 à 25 °C, et la solution étant privée d'oxygène au moyen d'un gaz inerte,
- on déclenche la réaction exothermique de polymérisation des monomères par addition d'un amorceur de polymérisation et un chauffage du mélange de polymérisation se produit avec formation d'un gel de polymère, jusqu'à sa température maximale et
- une fois atteinte la température maximale, le gel de polymère est fragmenté mécaniquement et séché.

9. Procédé selon la revendication 8, **caractérisé en ce que** la température de départ de la polymérisation est réglée dans une plage de 0 à 15 °C.

10. Procédé selon les revendications 8 et 9, **caractérisé en ce que** la concentration de la solution aqueuse de monomère et second polymère cationique va de 15 à 50 % en poids.

11. Procédé selon l'une quelconque des revendications 8 à 10, **caractérisé en ce que** l'amorceur de polymérisation consiste en un système redox et/ou en un système activable par rayonnement UV.

12. Procédé selon l'une quelconque des revendications 8 à 11, **caractérisé en ce que** la polymérisation est effectuée sur une bande de polymérisation.

13. Procédé selon l'une quelconque des revendications 8 à 12, **caractérisé en ce qu'**après sa fragmentation le gel de polymère aqueux est séché à des températures de 80 °C à 120 °C, jusqu'à une teneur en humidité inférieure ou égale à 12 %.

14. Utilisation des polymères selon l'une quelconque des revendications 1 à 7, en tant que floculant pour la séparation liquide/solide.

15. Utilisation selon la revendication 14, pour l'épuration d'eaux usées et pour le traitement d'eau potable.

16. Utilisation selon la revendication 14, dans la fabrication du papier.
